# EUROPÄISCHE PATENTSCHRIFT

(11) **EP 2 300 873 B1**
(45) Veröffentlichungstag und Bekanntmachung des Hinweises auf die Patenterteilung: **02.11.2011**
(21) Anmeldenummer: 09777036.6
(22) Anmeldetag: 08.07.2009
(51) Int. Cl.: G02F 1/167, G09F 9/37, B41J 3/407, C09D 11/00

(54) **MIKROKAPSEL, MIKROKAPSELN UMFASSENDES SYSTEM, VERFAHREN ZUR ZUSTANDSÄNDERUNG VON ZUMINDEST EINER MIKROKAPSEL**
MICROCAPSULE, SYSTEM COMPRISING MICROCAPSULES, METHOD FOR CHANGING THE STATE OF AT LEAST ONE MICROCAPSULE
MICROCAPSULE, SYSTÈME COMPORTANT DES MICROCAPSULES, PROCÉDÉ POUR MODIFIER L ÉTAT D AU MOINS UNE MICROCAPSULE

(30) Priorität: 11.07.2008 DE 102008032610
(43) Veröffentlichungstag der Anmeldung: 30.03.2011
(73) Patentinhaber: Fraunhofer-Gesellschaft zur Förderung der angewandten Forschung e.V., 80686 München (DE)
(72) Erfinder: MARGUTTI, Simona, 72764 Reutlingen (DE); ROTHFUSS, Florian, 70469 Stuttgart (DE); RATH, Karola, 64289 Darmstadt (DE); VOIGT, Simon, 70178 Stuttgart (DE)
(74) Vertreter: Maser, Jochen
(86) Internationale Anmeldenummer: PCT/EP2009/004938
(87) Internationale Veröffentlichungsnummer: WO 2010/003654

(56) Entgegenhaltungen:
- WO-A-2007/099597
- JP-A- 11 161 205
- OZIN G A ET AL: "P-Ink and Elast-Ink from lab to market" MATERIALS TODAY, Bd. 11, Nr. 7-8, 1. Juli 2008 (2008-07-01), Seiten 44-51, XP022758116 ISSN: 1369-7021 [gefunden am 2008-06-20]

## Beschreibung

Die Erfindung betrifft eine Mikrokapsel, ein Mikrokapseln umfassendes System sowie ein Verfahren zur Zustandsänderung von zumindest einer Mikrokapsel.

Aus der US 6 120 588 A ist eine elektrisch adressierbare Tinte mit Mikrokapseln bekannt, von denen erste Partikel eine Farbe mit einer ersten Ladung und zweite Partikel mit einer anderen Farbe mit einer zweiten Ladung entgegengesetzter Polarität umfassen. Durch Anlegen eines elektrischen Feldes mit einer ersten Polarität an die Mikrokapsel wird eine wahrnehmbare Farbänderung bewirkt, indem die ersten oder zweiten Partikel in einer Richtung gemäß dem Feld wandern. Diese Mlkrokapsein werden in papierähnlichen Displays bzw. in sogenannten elektrischen Papieren eingesetzt. Diese Mikrokapseln sind reversibel in dem Trägermedium angeordnet. Durch Ändern eines elektrischen Feldes kann die zuletzt eingestellte Anordnung und Ausrichtung der Partikel in den Mikrokapseln wieder rückgängig gemacht werden. Somit kann dieses elektrische Papier immer wieder neu beschrieben werden.

Alternativ zu dieser elektronisch adressierbaren Tinte wurde eine sogenannte photonische Tinte entwickelt. Photonische Kristalle sind aus Materialien mit periodisch-dieletrischen oder mit metall-dielektrischen Nanostrukturen zusammengesetzt, welche die Ausbreitung elektromagnetischer Wellen ermöglichen. Photonen verbreiten sich in Abhängigkeit ihrer Wellenlänge durch die Struktur. Einzelne Wellenlängen sind als Mode bekannt, nicht erlaubte Wellerllängenbänder werden als Photonenbandlücken bezeichnet. Für photoelektrische Anwendungen ist es gewünscht, dass ein photonisches Kristall ein einstellbares Stoppband aufweist, das in herkömmlicher Weise kontrolliert werden kann, um sogenannte aktiv einstellbare Opale zu erhalten, Beträchtliche Anstrengungen wurden unternommen, um dieses Ziel durch die Änderung von refraktiven Kennzahlen des Materials und den Gitterkonstanten oder der räumlichen Symmetrie der Kristalle durch die Anwendung von mechanischen Kräften (WO 08/098339 EA), durch elektrische Felder (US 2004/131799 A) oder durch magnetische Felder (WO 09/017525 A) zu erhalten.

Magnetisch induzierte photonische Tinten beruhen darauf, dass photonische Kristalle unter den Einfluss eines magnetischen Feldes gestellt werden. Die photonische Tinte setzt sich aus superparamagnetischen kolloidalen photonischen Kristallen zusammen. Die periodischen Strukturen, die typischerweise sich selbst aus monodispersen kolloidalen Blöcken bilden, enthalten die magnetischen Komponenten. Die monodispersen kolloidalen Blöcke bestehen in Polyacrylat-gekapselten superparamagnetischen Magnetiten (Fe304) umfassenden kollodialen rlanokristallinen Clustern. Diese Cluster werden durch ein Magnetfeld induziert, um eine dreidimensionale Struktur einzunehmen und bilden kollodiale photonische Kristalle mit hohen einstellbaren Stoppbändern, welche im gesamten sichtbaren Spektrum bewegt werden können. Die ausgegebene Farbe ist abhängig von den nanokristallinen Clustern in Abhängigkeit der Distanz, welche durch die Ausgeglichenheit zwischen repulsiver elektrostatischer Kraft (negativ geladenen Polyacrylat-gekapselten Oberflächen) und anziehender Zwischenkraft der Magnetit-Nanocluster im Magnetfeld darstellt.

In Abhängigkeit der Stärke des Magnetfeldes werden unterschiedliche Farbnuancen erzielt. Alternativ kann anstelle eines magnetischen Feldes auch ein elektrisches Feld oder mechanische Kräfte verwendet werden. Oben genannte Systeme, die aus der WO08/098339 A und US 2004/131799 A bekannt sind, können in ähnlicher Weise in Abhängigkeit der mechanischen Kräfte und elektrischer Felder in der Farbe einstellbar sein. Dieses System weist jedoch den Nachteil auf, dass die eingestellte Farbe der photonischen Kristalle nur so lange aufrechterhalten wird, solange das elektrische oder magnetische Feld oder mechanische Kräfte wirken. Der Einsatzbereich solcher photonischer Tinten ist somit stark begrenzt.

Aus der JP 11 161 205 A ist eine Mikrokapsel bekannt, welche einen Kern umfasst, der durch eine Umhüllung eingekapselt ist, wobei gleichartige Artikel mit einer Bewegungskomponente und einer Indikationskomponente in einer den Kern bildenden Substanz vorgesehen sind. Die Substanz des Kerns kann durch eine Substanzaktivierungsenergie aus einem festen oder höherviskosen Zustand in einen niederviskosen Zustand zumindest kurzzeitig überführt werden. Die gleichartigen Partikel können ihre Lage und Orientierung während dem niederviskosen Zustand der Substanz des Kerns durch eine Partikelaktivierungsenergie verändern. Sobald die Substanz des Kerns in den fest- oder höherviskosen Zustand zurückgeführt ist, werden die gleichartigen Partikel in ihrer neuen Lage und Orientierung fixiert.

Aus der WO 2007/099597 A geht eine ähnliche Mikrokapsel zu der zuvor beschriebenen Mikrokapsel hervor, welche alternativ zu den Heizrollen mit einer IR-Lampe zur kontaktlosen Wärmebeaufschlagung verwendet wird.

Aus der Zeitschrift "Materials Today" Bd11, Nr. 7 - 8, 1. Juli 2008, Seite 44 - 51 mit dem Titel "P-Ink and Elast - Inc. from lab to market" geht eine photonische Tinte hervor, die aus einem Opal zusammengesetzt ist, das in eine Matrix aus einem redox-aktiven Polyferrocenylsilan-Gel eingebettet ist. Dieses Metallpolymer schwillt bzw. schrumpft reversibel unter Einfluss eines elektrischen Feldes, wodurch sich die photonische Tinte in ihrer Farbe abstimmen lässt.

Der Erfindung liegt die Aufgabe zugrunde, eine Mikrokapsel, ein Mikrokapseln umfassendes System sowie ein Verfahren zur Zustandsänderung von zumindest einer Mikrokapsel vorzuschlagen, wodurch eine gezielte Positionierung und Fixizierung von Partikeln innerhalb einer Mikrokapsel ermöglicht wird, mit dem Ziel die Eigenschaftsausprägungen (z.B. optisch, physikalisch, chemisch, elektrisch) der Mikrokapsel zu verändern.

Diese Aufgabe wird erfindungsgemäß durch die Merkmale des Anspruchs 1 gelöst. Durch die erfindungsgemäße Ausgestaltung von Mikrokapseln, welche einen Kern mit einer Substanz umfassen, dessen Rheologie und/oder Viskosität veränderbar ist und auf einen Ausgangszustand zurückkehrt, wird ein sogenannter Memory-Effekt erzielt. Durch diesen Memory-Effekt wird ermöglicht, ohne zusätzliche äußere Energie eine eingestellte Position von zumindest einem in der Substanz angeordneten Partikel beizubehalten. Zur Einstellung einer bevorzugten Lage und/oder Orientierung der Partikel mit einer Bewegungs- und einer Indikationskomponente wird die Substanz aus einem festen oder hoch viskosem Zustand in einen zumindest niederviskosen Zustand übergeführt, der ermöglicht, dass eine Mehrzahl der Partikel in deren Lage und/oder Orientierung veränderbar sind.

Vorteilhafterweise ist die Hülle der Mikrokapsel sowie die Matrix in einer möglichst transparenten Weise ausgeprägt, so dass die Lichtwellenreflektion nicht gestört wird. Dabei ist des Weiteren vorgesehen, dass in der Mikrokapsel Partikel eingebracht sind, welche bei der Beaufschlagung mit einer externen Energie während sich die Matrix in einem niederviskosen Zustand befindet zu einem kolloidalen photonischen Kristall angeordnet werden. Dazu können insbesondere die in W009017525A beschriebenen Eisenoxid-Partikel eingesetzt werden. Die während des niederviskosen Zustandes der Matrix über beispielsweise ein Magnetfeld eingestellte Kristallgitterstruktur wird dann fixiert, indem die Substanzaktivierungsenergie entfernt und die Matrix in einen höherviskosen Zustand überführt wird. Damit lässt sich die reflektierte Lichtwellenlänge der Mikrokapsel über ein breites Spektrum einstellen und den jeweils eingestellte Reflektionszustand fixieren, ohne dass eine weitere Energiezufuhr zur Aufrechterhaltung des Zustandes notwendig ist. Zudem lässt sich aufgrund der Verkapselung des Systems mittels einer Mikrokapsel eine sehr gute Verarbeitungseigenschaft des Materials erreichen. So kann das Material auf Oberflächen aufgedruckt oder gestrichen werden oder in einen Werkstoff eingebracht werden.

Nachdem ein Energieeintrag einer Substanzaktivierungsenergie zur Überführung der Substanz in den niederviskosen Zustand beendet wird, kehrt die Substanz in einen festen oder höherviskosen Zustand zurück und fixiert die Mehrzahl an Partikel in deren neuen Lage und/oder Orientierung. Somit ist eine frei programmierbare Mikrokapsel geschaffen, welche auf verschiedene Einsatzzwecke einstellbar ist. Nach der Programmierung der Mikrokapsel ist bevorzugt keine weitere von außen einwirkende Energie erforderlich, um die Position der Mehrzahl der Partikel in der Mikrokapsel aufrechtzuerhalten. Diese Ausgestaltung der Mikrokapsel weist des Weiteren den Vorteil auf, dass ein einmal eingestellter bzw. der programmierte Zustand auch wieder geändert werden kann. Somit ist diese Mikrokapsel mehrfach veränderbar und auf unterschiedliche Zustände bedarfsweise im Hinblick auf die Lage und/oder Orientierung der Mehrzahl der Partikel veränderbar und neu einstellbar. Dadurch ermöglicht sich eine Vielzahl von verschiedenen Anwendungszwecken und Einsatzbereichen.

Für die Positionierung der Partikel in der Mikrokapsel sowie zu deren Fixierung in der eingestellten Position werden zusammenfassend zwei externe Energieeinträge eingesetzt:
- Die Substanzaktivierungsenergie dient der Überführung des Matrixmaterials in der Mikrokapsel in welches die Partikel dispergiert sind in einen niederviskosen Zustand. Bei der Substanzaktivierungsenergie handelt es sich beispielsweise um Wärmestrahlung (Infrarotlichtquelle) wenn die Matrix beispielsweise aus einem Latentwärmespeichermaterial wie Wachs oder Gelatine besteht. Oder es handelt sich beispielsweise um eine elektromagnetische Strahlung einer bestimmten Lichtwellenlänge (z.B. UV) wenn es sich bei der Matrix um ein photorheologisches Material handelt, welches seine Viskosität in Abhängigkeit der Beaufschlagung mit einer Lichtwellenlänge ändert.
- Die Partikelaktivierungsenergie dient der Positionierung der Mehrzahl von Partikel, welcher in der Matrix dispergiert und von der Mikrokapselwand umschlossen ist. Dabei dient die Partikelaktivierungsenergie sowohl der absoluten Positionierung der Partikel in der Kapsel (z.B. Konzentration der Partikel an der Kapselwand) als auch der relativen Positionierung der Partikel zueinander (beispielsweise das Ausbilden einer Kristallgitterstruktur). Bei der Partikelaktivierungsenergie handelt es sich beispielsweise um ein Magnetfeld (Permanent oder Elektromagnet) falls die Partikel über magnetische, paramagnetische oder superparamagnetische Eigenschaften verfügen. Oder es handelt sich um ein elektrisches Feld wenn die Partikel über eine elektrostatische Ladung verfügen.

Nach einer bevorzugten Ausgestaltung der Mikrokapsel ist vorgesehen, dass die Viskosität der Substanz, die durch die Substanzaktivierungsenergie veränderbar ist, durch eine Wärmestrahlung oder eine elektromagnetische Strahlung erzeugt wird. Dadurch wird ermöglicht, dass die Substanzaktivierungsenergie während dem Einwirken auf die Substanz nicht oder nicht wesentlich auf die Mehrzahl der Partikel einwirkt, so dass diese Aktivierungsenergie ausschließlich und spezifisch auf die Substanz wirkt. Bevorzugt ist vorgesehen, dass die Substanz aus einem Weichmacher oder Emulgator besteht, durch welchen die Zustandsänderung ermöglicht wird.

Nach einer weiteren bevorzugten Ausgestaltung der Mikrokapsel ist vorgesehen, dass die Mehrzahl von Partikel mit einer Partikelaktivierungsenergie in deren Lage und/oder Orientierung veränderbar sind, welche durch ein elektromagnetisches oder elektrisches oder magnetisches Feld erzeugt wird. Somit kann das elektrische, magnetische oder elektromagnetische Feld den Zustand der Substanz im Kern der Mikrokapsel nahezu oder nicht beeinflussen, so dass diese Energie auf die Bewegungskomponente der Mehrzahl der Partikel wirkt und somit eine Veränderung in seiner Lage und/oder Orientierung ermöglicht.

Die Mehrzahl von in der Mikrokapsel vorgesehener Partikel sind bevorzugt aus einem magnetisierbaren oder mit einer elektrischen Ladung versehenen Material ausgebildet und weisen bevorzugt eine Bewegungskomponente auf, die eine elektrische oder magnetische Ladung umfasst. Dies ermöglicht eine einfache Ansteuerung. Die Partikel sind als supermagnetische Magnetit-Partikel ausgebildet.

Die Aufgabe wird des Weiteren erfindungsgemäß durch ein Mikrokapseln umfassendes System gemäß Anspruch 6 gelöst, bei dem in einem Trägermedium eine Vielzahl von Mikrokapseln dispergiert ist. Als Trägermedium bei dem Mikrokapseln umfassenden System kann beispielsweise ein dünnschichtbildendes Beschichtungsmaterial, wie beispielsweise zerstäubte Teilchen und Metalllegierungen, vorgesehen sein, welche im Bereich der Mikroelektronik benutzt werden, um hochelnstellbare physikalische Eigenschaften zu erzielen. Ein weiteres Beispiel für ein Trägermedium können Metalloxide sein, welche für ophthalmische Beschichtungen für hocheinstellbare optische Effekte, wie beispielsweise für den Lichtbrechungsindex, Farben usw., eingesetzt werden. Im Allgemeinen können die erfindungsgemäßen Mikrokapseln sowohl in feste als auch in flüssige Formulierungen eingebettet werden (Reza Arshady, Microspheres Microcapsules & Liposomes (MML Series) Preparation & Chemical Applications Vol. 1 Citus Book, London 1999; Swapan K. Ghosh, Funktional coatings: by polymer microencapsulation, Wiley-VCH. 2006: Simon Benita, Microencapsulation: Methods And Industrial Applications, Simon Benita editor 2006). Die flüssigen Formulierungen kann das eingekapselte System bspw. in Lacken, die in der Automobilindustrie eingesetzt werden, verwendet werden, wodurch eine Abstimmung der Fahrzeugfarbe oder eine Anzeige von Werbung erreicht werden kann. Die eingekapselte Formulierung kann ebenfalls Kunststoffkomponenten während des Fabrikationsprozesses zugegeben werden, wodurch die Haltbarkeit der Kunststoffgegenstände bspw. Kunststofftüten, Kunststoffutensilien, Abdeckungen oder Labels, verbessert wird. Die erfindungsgemäßen Mikrokapseln können ebenfalls druckbaren Medien zugegeben werden, um ein wiederbeschreibbares System bereit zu stellen. [US 6,045,955].

Des Weiteren ist bevorzugt zumindest eine Mikrokapsel im Mikrokapseln umfassenden System vorgesehen, bei welcher die Substanz des Kernes zur Viskositätsänderung von einem festen oder höherviskosen Zustand in einen niederviskosen Zustand auf einem abweichenden Niveau als eine Substanz eines Kerns von zumindest einer weiteren Mikrokapsel liegt. Dadurch wird eine erhöhte Flexibilität in der Einstellung von unterschiedlichen Effekten ermöglicht. Somit können nicht nur die Partikel innerhalb der Mikrokapseln, sondern auch die Mikrokapseln untereinander, unterschiedlich in ihrem Zustand eingestellt werden.

Bei LCD- oder OLED-Bildschirmen, Touch-Panels, Solarzellen oder dergleichen können Mikrokapseln ebenfalls eingesetzt werden. In diesen Fällen sind als Träger hochdichtzerstäubte Bereiche, beispielsweise aus Indium-Zink-Oxid, Aluminium dotiertem Zink-Oxid oder dergleichen, vorgesehen.

Das Trägermedium für Mikrokapseln kann auch in Form von Verschleißschutzbeschichtungen oder dekorativen Beschichtungen ausgebildet sein, welche bei verschiedenen Produkten, wie beispielsweise Türgriffen, Telefonen, Computern, Sitzen, Möbeln, Bad- und Sanitärteilen sowie Automobilteilen eingesetzt werden.

Weitere Trägermedien für die Mikrokapseln umfassende Systeme können Lacke, Firnisse oder Tinten sein, deren Farbe dadurch einstellbar wird. Als weiteres Trägermedium können Wasser und Gewebe, Textilien oder Vliese bilden, auf welchen mittels Adhäsionsmaterialien, wie beispielsweise Gelatine oder dergleichen, Mikrokapseln für optisch einstellbare Textilien aufgebracht sind.

Die Aufgabe wird des Weiteren erfindungsgemäß durch ein Verfahren gemäß Anspruch 8 zur Zustandsänderung von zumindest einer Mikrokapsel in einem Mikrokapseln umfassenden System gelöst, bei dem die Mikrokapsel in einem Trägermedium dispergiert sind, bei dem die zumindest eine Mikrokapsel mit einer Substanzaktivierungsenergie beaufschlagt wird, bis die Substanz des Kerns durch die Substanzaktivierungsenergie aus einem festen oder höherviskosen Zustand in einen niederviskosen Zustand übergeführt wird. Anschließend wirkt die Partikelaktivierungsenergie, so dass die Mehrzahl an Partikel in deren Lage und/oder Orientierung verändert werden. Die Partikelaktivierungsenergie wird solange aufrechterhalten, bis die Substanz des Kerns wieder in einen höherviskosen oder festen Zustand übergegangen ist, so dass die neu einprogrammierte Lage und/oder Orientierung des oder der Partikel aufrechterhalten wird. Als Substanz des Kerns wird eine photorheologische Flüssigkeit eingesetzt, deren Viskosität durch eine elektromagnetische Strahlung erzeugt wird. Dabei können die Substanzaktivierungsenergie und Partikelaktivierungsenergie gleichzeitig einwirken. Bevorzugt wird die Partikelaktivierungsenergie jedoch zeitversetzt zugeschalten. Während die Partikel in der Lage und/oder Orientierung verändert werden, kann bevorzugt die Substanzaktivierungsenergie noch aufrechterhalten werden. In Abhängigkeit der Substanz des Kernes kann diese aber auch nach dem Überführen in einen wieder viskosen Zustand abgeschalten werden, so dass die Ausrichtung der Partikel in der Lage und/oder Orientierung noch innerhalb der Zeit erfolgt, bis die Substanz in einen höherviskosen oder festen Zustand übergeht.

Des Weiteren ist bevorzugt vorgesehen, dass die Substanzaktivierungsenergie zur Änderung des Zustands der Substanz des Kernes durch eine Wärmestrahlung, insbesondere durch eine Infrarotlichtquelle, oder durch eine elektromagnetische Strahlung, insbesondere durch eine UV-Lampe oder eine Lasereinrichtung, erzeugt wird. In Abhängigkeit der verwendeten Materialien kann die eine oder andere Energiequelle eingesetzt werden.

Des Weiteren ist bevorzugt vorgesehen, dass die Partikelaktivierungsenergie zur Änderung der Lage und/oder Orientierung des oder der Partikel durch ein Magnetfeld, wie beispielsweise durch einen Permanent- oder Elektromagneten, oder durch ein elektrisches Feld erzeugt wird. Dies ist abhängig von der Ausgestaltung der Partikel, so dass anwendungsspezifisch die Erzeugung eines Magnetfeldes oder elektrischen Feldes ausgewählt wird.

Nach einer weiteren bevorzugten Ausgestaltung des Verfahrens ist vorgesehen, dass die Substanzaktivierungsenergie flächenförmig auf ein Trägermedium wirkt, in dem die Mikrokapseln dispergiert sind und die Partikelaktivierungsenergie gezielt auf einzelne Mikrokapseln eingetragen wird. Dadurch kann eine spezifische und definierte Zustandsänderung der Mikrokapseln erfolgen. Bei beispielsweise einer Farbänderung der Mikrokapsel kann dadurch ein bestimmtes Farbmuster, Farbraster oder Sicherheitsmuster eingestellt werden.

Alternativ kann vorgesehen sein, dass die Partikelaktivierungsenergie flächenförmig wirkt und die Substanzaktivierungsenergie gezielt eingebracht wird. Dadurch kann derselbe Effekt erzielt werden.

Des Weiteren ist bevorzugt vorgesehen, dass die Substanzaktivierungsenergie und Partikelaktivierungsenergie kontaktlos eingetragen werden. Dadurch können umfassende Anwendungsbereiche eröffnet werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Darstellung einer erfindungsgemäβen Mikrokapsel,
- Figuren 2a + b: eine schematische Ansicht einer ersten und weiteren Ausführungsform einer Mikrokapsel,
- Figuren 3a - c: schematische Schnittdarstellungen von Mikrokapseln mit verschieden Energieeinträgen,
- Figur 4: eine erste Ausführungsform einer Vorrichtung zur Zustandsänderung von Mikrokapseln und
- Figur 5: eine alternative Ausführungsform einer Vorrichtung für eine Zustandsänderung von Mikrokapseln.

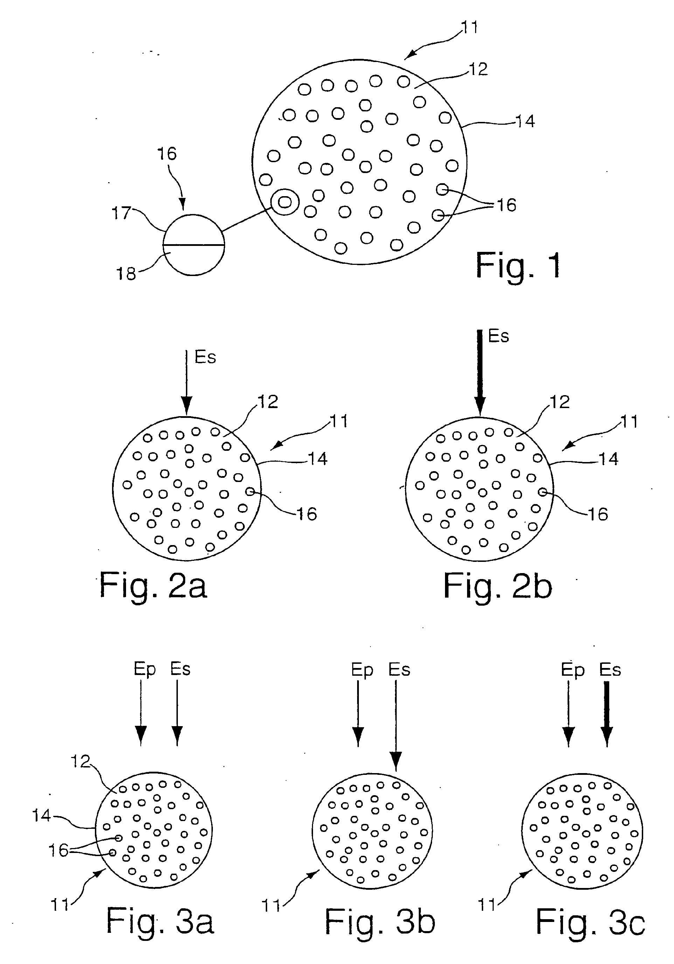

In Figur 1 ist eine schematische Schnittdarstellung einer ersten Ausführungsform einer Mikrokapsel 11 dargestellt. Diese Mikrokapsel 11 umfasst einen Kern 12, der von zumindest einer Umhüllung 14 umgeben ist, welche bevorzugt transparent ausgebildet ist. In dem Kern 12 sind Partikel 16 vorgesehen. Diese Partikel 16 umfassen eine Bewegungskomponente 17 und eine Indikationskomponente 18. Die Bewegungskomponente 17 ermöglicht, dass das Partikel 16 durch einen Energieeintrag aktivierbar ist. Dies kann beispielsweise elektrisch oder magnetisch erfolgen, so dass die Bewegungskomponente magnetische oder elektrische Eigenschaften umfasst. Die Indikationskomponente 18 umfasst beispielsweise optische, chemische, physikalische Eigenschaften, um verschiedene Wirkungen zu erzielen.

Der Kern 12 der Mikrokapsel 11 besteht aus einer Substanz, deren Viskosität in Abhängigkeit eines Energieeintrages veränderbar ist. Bevorzugt wird ein Material für die Substanz in Abhängigkeit der Härte bzw. Dichte des Brechungsindexes und der Löslichkeit ausgewählt. Des Weiteren wird die chemische Fähigkeit, die Stabilität bzw. das Aufbaumaterial für die Partikel berücksichtigt, so dass eine chemische Kompatibilität zwischen den Partikeln und der Substanz gegeben ist. Die Hauptcharakteristik der Substanz ist jedoch die Viskosität, welche sich aufgrund eines Energieeintrages durch eine Substanzaktivierungsenergie, wie beispielsweise einer Wärmestrahlung oder elektromagnetischen Strahlung, ändert. Die Viskosität muss hoch sein in der Weise, dass es ermöglicht ist, die Partikel in einer bestimmten Position zu fixieren, ohne dass bei einer gegebenen Partikelaktivierungsenergie eine Änderung der Lage und/oder Orientierung der Partikel ermöglicht ist. Dies soll erst dann ermöglicht werden, wenn eine hinreichend niedere Viskosität geschaffen ist, das heißt, dass die Substanz einen niederviskosen Zustand eingenommen hat. Darüber hinaus ist bei der Auswahl des Materials für die Substanz von Bedeutung, dass nach einem Energieeintrag eine schnelle Rückkehr von einer im niederviskosen in einen höherviskosen oder festen Zustand erfolgt. In einzelnen Fällen, zum Beispiel bei elektrophoresischen Systemen, ist es von Vorteil, wenn Weichmacher oder Emulgatoren zusätzlich zu den optisch aktiven Elementen, wie Farbstoffe, oder zu den Ladungsträgern vorgesehen sind, um einer Agglomeration vorzubeugen.

Zur Bildung des Kern 12 können Substanzen wie beispielsweise sogenannte Phasenänderungsmaterialien (Phase Change Materials, (PCMs) vorgesehen sein. Des Weiteren können Polymere mit geeigneten Glasübergangstemperaturen sowie photorheologische, elektrorheologische oder magnetorheologische Flüssigkeiten vorgesehen sein. Die Viskosität von Phasenänderungsmaterialien, wie beispielsweise Paraffinen, kann durch die Einwirkung von thermischer Energie bestimmt werden. In Abhängigkeit der eingebrachten thermischen Energie kann somit der Grad der Viskosität eingestellt werden. Bei einem Kern 12 aus einer Polymersubstanz wird durch das Einbringen von thermischer Energie die Glasübergangstemperatur mit einer daraus folgenden Änderung der polymeren Viskosität erzeugt. Bei Substanzen des Kerns 12, welche aus einem photorheologischen, elektrorheologischen oder magnetorheologischen Flüssigkeiten besteht, wird die Änderung der Viskosität durch die Anwendung durch Licht oder elektrischen oder magnetischen Feldern erzeugt. Als Beispiel für photorheologische Flüssigkeiten, welche geeignet sind, von einem fest-gelförmigen Zustand in einen flüssigen Zustand bei einer Belichtung mit UV-Licht überzugehen, sind solche Flüssigkeiten, die aus kationischen oberflächenaktiven Cetyltrimethylammoniumbromiden (CTAB) zusammen mit einem photosensitiven organischen Säure oder Salzen bestehen. Ein Beispiel für ein photosensitiv organisches Salz ist Trans-ortho-methoxy-Zimtsäure, wie beispielsweise das OMCA in J.Am. Chem. Soc. 2007, 129, 1553-1559 beschrieben ist. Weitere Beispiele der photorheologischen Materialien sind Azobenzene- enthaltende PolymerNetzwerke (Macromolecules 1999, 32, 3195-3200) und dendritisches Organogel (Chem. Commun., 2007, 4233-4235). Die Umhüllung 14 ist bevorzugt aus Polymeren bzw. einer Polymermatrix vorgesehen und kann als eine abgrenzende physikalische Grenze zwischen dem Kern der Mikrokapsel 11 und einem Trägermaterial dienen, indem die Mikrokapseln dispergiert sind. Erfindungsgemäß besteht die den Kern bildende Substanz aus einer photorheologischen Flüssigkeit.

Die Partikel 16 können unmittelbar oder durch eine Emulsion in die Substanz des Kernes dispergiert werden. Solche Polymerdispergiersysteme können ebenfalls vorgesehen sein.

In einer Mikrokapsel 11 sind erfindungsgemäß nur gleichartige Partikel 16 vorgesehen. Alternativ aber nicht erfindungsgemäß kann vorgesehen sein, dass unterschiedliche Partikel 16 in einer Mikrokapsel 11 enthalten sind. Diese unterschiedlichen Partikel 16 können in der Bewegungskomponente 17 und/oder Indikationskomponente 18 voneinander abweichen.

Die Mikrokapseln 11 sind in einem System eingebunden, welches ein Trägermedium umfasst. Dieses Trägermedium kann des Weiteren fest oder flüssig mit verschiedenen Viskositäten vorgesehen sein. Ebenso können organische oder inorganische Materialien für die Aufnahme von Mikrokapseln in Abhängigkeit der spezifischen Anwendungen geeignet sein. Beispielsweise kann das System auf eine Oberfläche, wie beispielsweise auf Automobilteilen oder Karosserieteilen, angewendet werden als hochviskoser Lack, der nach dem Aushärten eine feste Beschichtung mit einer Farbe ergibt, die in Abhängigkeit der eingebrachten Energie veränderbar und einstellbar ist. Die Mikrokapseln 11 umfassen bevorzugt einen Durchmesser von weniger als 1 cm, insbesondere von weniger als 500 µm. In besonderen Fällen können die Mikrokapseln 11 auch einen Durchmesser von weniger als 1 µm umfassen.

In Figur 2a und b sind Mikrokapseln 11 dargestellt, bei denen die jeweilige Substanz des Kernes 12 voneinander abweicht. Beispielsweise ist die Substanz gemäß Figur 2a bereits bei einer geringeren Substanzaktivierungsenergie Eₛ höherviskos, so dass die Partikel 16 sich in ihrer Lage und/oder Orientierung ändern können, als dies bei der Mikrokapsel 11 gemäß Figur 2b der Fall ist. Alternativ kann auch vorgesehen sein, dass unterschiedliche Substanzen bei nahezu gleicher Energie veränderbar sind. Dies ist beispielsweise bei einem Wachs C15 und einem Wachs C16 der Fall.

In den Figuren 3a bis c ist beispielhaft die Energieeinbringung dargestellt, die zur Zustandsänderung der Mikrokapsel 11 führt. Gemäß Figur 3a ist beispielhaft vorgesehen, dass die beiden Substanzen und Partikelaktivierungsenergie Eₛ, Eₚ betragsmäßig zu gering sind, so dass keine Zustandsänderung der Mikrokapsel 11 erfolgt. In Figur 3b ist die Substanzaktivierungsenergie Eₛ vergrößert, das heißt, eine Viskositätsänderung ist gegeben, jedoch noch nicht hinreichend, so dass bei bestehender Partikelaktivierungsenergie Eₚ noch keine Änderung in der Lage und Orientierung der Partikel 16 erfolgt. In Figur 3c ist die Substanzaktivierungsenergie Eₛ nun hinreichend hoch, so dass die Viskosität erreicht ist, die eine Änderung der Partikel 16 in Lage und Orientierung aufgrund der vorherrschenden Partikelaktivierungsenergie Eₚ ermöglicht. Unmittelbar nachdem die Substanzaktivierungsenergie Eₛ abgeschaltet ist, nimmt die Viskosität ab und die Lage und/oder Orientierung der Partikel 16 wird in der Substanz fixiert.

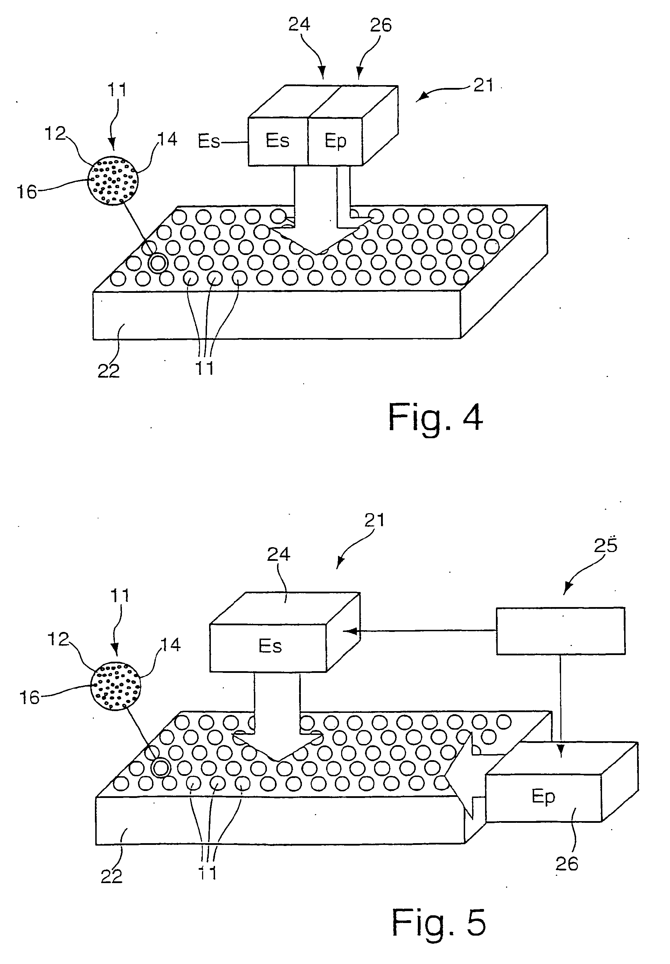

In Figur 4 ist eine schematische Anordnung einer Vorrichtung 21 zur Zustandsänderung von Mikrokapseln 11 dargestellt, welche in einem Trägermedium 22 dispergiert sind. Beispielsweise ist eine Energiequelle 24 für die Substanzaktivierung als auch eine Energiequelle 26 für die Partikelaktivierung in einem Gehäuse vorgesehen. Alternativ können die jeweiligen Energiequellen 24, 26, auch getrennt ausgebildet jedoch zueinander positioniert werden, damit diese gleichzeitig auf ein und denselben Ort einwirken.

In Figur 5 ist eine alternative Ausführungsform der Vorrichtung 21 dargestellt. Beispielsweise sind die beiden Energiequellen 24, 26, räumlich getrennt zueinander anordenbar, so dass diese jeweils in unterschiedlicher Richtung auf das Trägermedium 22 einwirken, um die Substanz im Kern 12 und die Partikel 16 anzusprechen .

Nach dem Überführen der Substanz in einen niederviskosen Zustand der Substanz kann die erneute Veränderung der Viskosität in den Ausgangszustand durch Abschalten der Energiequelle Eₛ oder durch einen physikalischen oder chemischen Prozess erfolgen. Dies kann also durch eine Aktivierung mittels einer weiteren Energiezufuhr oder einer automatischen Deaktivierung über die Zeit erfolgen.

Die Vorrichtung 21 kann sowohl manuell als auch automatisiert oder mit einer automatischen Korrelation der aufzuwendenden Energien angesteuert werden, um eine optimale Abstimmung der systemstabilisierenden Wirkung der Matrix der Substanz und des Veränderungsprozesses über die Variation der funktionellen Partikel zu ermöglichen. Die Energieeintragung der Vorrichtung 21 kann variabel steuerbar nur auf eine Mikrokapsel 11 oder flächenförmig erfolgen. Der Energieeintrag der Energiequellen 24, 26, der Vorrichtung 21 kann kontaktlos oder kontaktbezogen mit dem die Mikrokapseln 11 umfassenden System erfolgen. Die vorgeschriebene notwendige substanzielle Koppelung und Abstimmung der verwendeten Energien in der Vorrichtung 21 erfordert nicht zwingend eine instrumentäre räumliche Koppelung. Ebenfalls ist eine zeitliche Koppelung nur bedingt erforderlich.

Bei einer räumlichen Entkoppelung kann eine Steuereinrichtung 25 für die Energiequellen 24, 26, auch separat vorgesehen sein.

Die erfindungsgemäßen Mikrokapseln 11 beziehungsweise das erfindungsgemäße Mikrokapseln umfassende System ermöglicht somit aufgrund deren Programmierbarkeit die Verwendung für eine Vielzahl von Einsatzfällen, wie beispielsweise die Anwendung von in der Farbe einstellbaren Tinten. Darüber hinaus können Lacke und Beschichtungen vorgesehen sein, deren Erscheinungsbild auch noch nachträglich durch das Einbringen der Energien geändert werden kann. Beispielsweise können diese Mikrokapseln umfassenden Systeme auch in Plastikbauteile eingesetzt werden. Zusätzlich ermöglichen diese Mikrokapseln eine Einbindung in Textilien, so dass Kleidungsstücke bedarfsmäßig in der Farbe bzw. im Erscheinungsbild geändert werden können. Ebenso können diese Mikrokapseln umfassenden Systeme auch als Sicherheitselemente oder Magnetstreifen für ID-Karten oder Kreditkarten eingesetzt werden, indem die Ausrichtung der Mikrokapseln als Codierung eingestellt werden. Darüber hinaus können die Mikrokapseln umfassenden Systeme in Sicherheitsdokumenten, Zugangskarten und dergleichen eingesetzt werden.

## Patentansprüche

1. Mikrokapsel, welche einen Kern (12) umfasst, der durch eine Umhüllung (14) eingekapselt ist, wobei eine Mehrzahl von Partikel (16) mit einer Bewegungs- und Indikationskomponente (17), (18) in einer den Kern (12) bildenden Substanz vorgesehen ist, welche durch eine Substanzaktivierungsenergie aus einem festen oder höherviskosen Zustand in einen niederviskosen Zustand zumindest kurzzeitig überführbar ist und die Mehrzahl von Partikel (16) in deren Lage und/oder Orientierung während dem niederviskosen Zustand der Substanz des Kerns (12) durch eine Partikelaktivierungsenergie veränderbar sind und die Substanz des Kerns (12) nach dem Eintrag der Substandaktivierungsenergie in den fest- oder höherviskosen Zustand zurückkehrt und die Mehrzahl von Partikel (16) in deren neuen Lage und/oder Orientierung fixiert sind, **dadurch gekennzeichnet, dass** im Kern (12) nur gleichartige Partikel (16) vorgesehen sind und dass in der Mikrokapsel (11) Partikel (16) eingebracht sind, welche bei der Beaufschlagung mit einer Partikeiaktivlerungsenergie, während sich die Kern (12) bildende Substanz in dem niederviskosen Zustand befindet, zu einem kolloidalen photonischen Kristall angeordnet werden und die den Kern (12) bildende Substanz aus einer photorheologischen Flüssigkeit besteht.

2. Mikrokapsel nach Anspruch 1, **dadurch gekennzeichnet, dass** die Viskosität der Substanz des Kerns (12) durch eine Substanzaktivierungsenergie veränderbar ist, welche durch eine elektromagnetische Strahlung erzeugt wird.

3. Mikrokapsel nach Anspruch 1, **dadurch gekennzeichnet, dass** die Mehrzahl von Partikel (16) in deren Lage und/oder Orientierung mit einer Partikelaktivierungsenergie veränderbar sind, weiche durch ein elektrisches, magnetisches oder elektromagnetisches Feld erzeugt wird.

4. Mikrokapsel nach einem der vorhergehenden Ansprüche, **dadurch gekennzeichnet, dass** als Bewegungskomponente (17) für die Mehrzahl von Partikel (16) eine elektrische oder magnetische Ladung vorgesehen ist und die Mehrzahl von Partikel (16) aus einem magnetisierbarem Material, insbesondere als superparamagnetische Magnetit-Partikel, oder aus einem eine Ladung aufnehmenden Material ausgebildet sind.

5. Mikrokapsel nach einem der vorhergehenden Ansprüche, **dadurch gekennzeichnet, dass** die Umhüllung (14) transparent ist.

6. Mikrokapseln umfassendes System, mit einem Trägermedium (22), **dadurch gekennzeichnet, dass** Mikrokapseln (11) nach einem der Ansprüche 1 bis 5 in dem Trägermedium (22) dispergiert sind.

7. Mikrokapsel umfassendes System nach Anspruch 6, **dadurch gekennzeichnet, dass** zumindest eine Mikrokapsel (11) mit einer Substanz vorgesehen ist, deren Viskositätsänderung von einem festen oder höherviskosen Zustand in einen niederviskosen Zustand auf einem abweichenden Energieniveau erfolgt als die Substanz in zumindest einer weiteren Mikrokapsel (11).

8. Verfahren zur Zustandsänderung von zumindest einer Mikrokapsel (11) nach einem der Ansprüche 1 bis 7, in einem Mikrokapseln (11) umfassenden System, bei dem die Mikrokapseln (11) in einem Trägermedium (22) dispergiert sind, bei dem die zumindest eine Mikrokapsel (11) mit einer Substanzaktivierungsenergie beaufschlagt wird, bis die Substanz des Kerns (12) aus einem festen oder höherviskosen Zustand in einen niederviskosen Zustand übergeführt wird,
- bei dem im niederviskosen Zustand der Substanz des Kernes (12) die Mehrzahl von Partikel (16) mit einer Partikelaktivierungsenergie in deren Lage und/oder Orientierung verändert werden und
- bei dem die Partikelaktivierungsenergie zur Einnahme der veränderten Lage und/oder Orientierung der Mehrzahl von Partikel (16) solange aufrechterhalten werden, bis die Substanz des Kernes (12) wieder in einen höherviskosen oder festen Zustand zurückgekehrt ist, **dadurch gekennzeichnet, dass**
- als Substanz des Kerns (12) eine photorheologische Flüssigkeit eingesetzt wird, deren Viskosität durch eine elektromagnetische Strahlung erzeugt wird.

9. Verfahren nach Anspruch 8, **dadurch gekennzeichnet, dass** die elektromagnetische Strahlung durch eine UV-Lampe oder Lasereinrichtung erzeugt wird.

10. Verfahren nach Anspruch 8, **dadurch gekennzeichnet, dass** die Partikelaktivierungsenergie zur Veränderung der Lage und/oder der Orientierung der Partikel durch ein Magnetfeld beispielsweise durch einen Permanent- oder Elektromagneten oder durch ein elektrisches Feld erzeugt wird.

11. Verfahren nach Anspruch 8, **dadurch gekennzeichnet, dass** die Substanzaktivierungsenergie flächenförmig auf ein Trägermedium (22) mit zumindest einer Mikrokapsel (11) eingetragen wird und dass die Partikelaktivierungsenergie spezifisch auf die zumindest eine Mikrokapsel (11) eingetragen wird.

12. Verfahren nach Anspruch 8, **dadurch gekennzeichnet, dass** die Substanzaktivierungsenergie und Partikelaktivierungsenergie flächenförmig auf die Mikrokapseln (11) eingetragen wird.

13. Verfahren nach Anspruch 8, **dadurch gekennzeichnet, dass** die Substanzaktivierungsenergie in verschiedenen Energiestufen eingetragen wird und/oder dass die Partikelaktivierungsenergie in verschiedenen Energiestufen eingetragen wird.

14. Verfahren nach einem der Ansprüche 8 bis 13, **dadurch gekennzeichnet, dass** die Substanzaktivierungsenergie und die Partikelaktivterungsenergie kontaktlos aufgetragen werden.

## Claims

1. A microcapsule which comprises a core (12) that is encapsulated by an envelope (14), wherein a plurality of particle (16) with a motion component (17) and an indication component (18) is provided in a substance forming the core (12) which is capable of being transferred by the action of a substance-activating energy, at least for a short time, from a solid state or higher-viscosity state to a low-viscosity state, and the plurality of particle (16) is capable of undergoing a change as to its position and/or orientation due to the action of a particle-activating energy occurring during the low-viscosity state of the substance of the core (12), and the substance of the core (12) reverts back, upon completion of the input of the substance-activating energy, to the solid state or higher-viscosity state, thereby immobilising the plurality of particle (16) in its new position and/or orientation, **characterised in that** only particles (16) of the same kind are provided within the core (12) and **in that** the microcapsule (11) has particles (16) incorporated therein which are arranged to form a colloidal, photonic crystal when exposed to a particle-activating energy while the substance forming the core (12) is in the low-viscosity state, and **in that** the substance forming said core (12) consists of a photorheological liquid.

2. The microcapsule as claimed in claim 1, **characterised in that** the viscosity of the substance of the core (12) is modified by a substance-activating energy, which is created by electromagnetic radiation.

3. The microcapsule as claimed in claim 1, **characterised in that** the position and/or orientation of the plurality of particle (16) is capable of being modified by means of a particle-activating energy created by an electric field, a magnetic field, or an electromagnetic field.

4. The microcapsule as claimed in any one of the preceding claims, **characterised in that** an electric or a magnetic charge is provided as a motion component (17) for the plurality of particle (16) and **in that** the plurality of particle (16) is made of a magnetisable material, in particular in the form of superparamagnetic magnetite particles, or is made of a material holding a charge.

5. The microcapsule as claimed in any one of the preceding claims, **characterised in that** the envelope (14) is transparent.

6. A system comprising microcapsules and having a carrier medium (22), **characterised in that** microcapsules (11) as claimed in any one of claims 1 to 5 are dispersed within the carrier medium (22).

7. The system comprising microcapsules as claimed in claim 6, **characterised in that** at least one microcapsule (11) is provided which has a substance in which the change in viscosity leading from a solid state or higher-viscosity state to a low-viscosity state takes place on an energy level differing from that of the substance in at least one further microcapsule (11).

8. A method of changing the state of at least one microcapsule (11) as claimed in any one of claims 1 to 7, in a system comprising microcapsules (11) in which the microcapsules (11) are dispersed within a carrier medium (22), wherein the at least one microcapsule (11) is exposed to a substance-activating energy acting thereon until the substance of the core (12) has been transferred from a solid state or higher-viscosity state to a low-viscosity state,
- wherein the position and/or orientation of the plurality of particle (16) is changed by the action of a particle-activating energy while the substance of the core (12) is in the low-viscosity state, and
- wherein the action of the particle-activating energy by which the changed position and/or orientation of the plurality of particle (16) has been made possible is maintained until the substance of the core (12) has returned to a higher-viscosity state or solid state, **characterised in that**
- the substance used for the core (12) is a photorheological liquid, which viscosity is generated by electromagnetic radiation.

9. The method as claimed in claim 8, **characterised in that** the electromagnetic radiation is generated by a UV lamp, or by a laser device.

10. The method as claimed in claim 8, **characterised in that** the particle-activating energy used for changing the position and/or the orientation of the particles is generated by a magnetic field, for example of a permanent magnet or an electromagnet, or by an electric field.

11. The method as claimed in claim 8, **characterised in that** the substance-activating energy is supplied in a planar manner to the carrier medium (22) having at least one microcapsule (11) and that the particle-activating energy is supplied specifically focused on said at least one microcapsule (11).

12. The method as claimed in claim 8, **characterised in that** both the substance-activating energy and the particle-activating energy are supplied in a planar manner to the microcapsules (11).

13. The method as claimed in claim 8, **characterised in that** the substance-activating energy is supplied in different energy levels and/or that the particle-activating energy is supplied in different energy levels.

14. The method as claimed in any one of claims 8 to 13, **characterised in that** the substance-activating energy and the particle-activating energy are applied in a contactless manner.

## Revendications

1. Microcapsule comprenant un noyau (12) qui est encapsulé par une enveloppe (14), une pluralité de particules (16) pourvues d'une composante de mouvement (17) et d'une composante d'indication (18) étant prévue dans une substance formant le noyau (12), laquelle peut passer au moins à court terme, grâce à une énergie d'activation de substance, d'un état solide ou de viscosité élevée à un état de basse viscosité, la pluralité de particules (16) étant modifiable quant à la position et/ou à l'orientation grâce à une énergie d'activation de particules alors que la substance du noyau (12) se trouve à l'état de basse viscosité et la substance du noyau (12) retournant, après avoir été soumise à l'énergie d'activation de substance, à l'état solide ou de viscosité élevée, et la pluralité de particules (16) étant fixée dans la nouvelle position et/ou orientation, **caractérisée en ce que** dans le noyau (12) sont prévues uniquement des particules (16) de même nature, et **en ce que** dans la microcapsule (11) sont introduites des particules (16) qui, lorsqu'elles sont soumises à une énergie d'activation de particules alors que la substance formant le noyau (12) se trouve à l'état de basse viscosité, sont ordonnées en un cristal photonique colloïdal, et **en ce que** la substance formant le noyau (12) est constituée par un liquide à rhéologie photosensible.

2. Microcapsule selon la revendication 1, **caractérisée en ce que** la viscosité de la substance du noyau (12) est modifiable grâce à une énergie d'activation de substance qui est générée par un rayonnement électromagnétique.

3. Microcapsule selon la revendication 1, **caractérisée en ce que** la pluralité de particules (16) est modifiable quant à la position et/ou à l'orientation grâce à une énergie d'activation de particules qui est générée par un champ électrique, magnétique ou électromagnétique.

4. Microcapsule selon l'une des revendications précédentes, **caractérisée en ce qu'**il est prévu comme composante de mouvement (17) pour la pluralité de particules (16) une charge électrique ou magnétique, et **en ce que** la pluralité de particules (16) est formée en un matériau magnétisable, notamment sous forme de particules de magnétite super paramagnétique, ou en un matériau apte à recevoir une charge.

5. Microcapsule selon l'une des revendications précédentes, **caractérisée en ce que** l'enveloppe (14) est transparente.

6. Système comprenant des microcapsules, avec un milieu porteur (22), **caractérisé en ce que** des microcapsules (11) selon l'une des revendications 1 à 5 sont dispersées dans le milieu porteur (22).

7. Système comprenant des microcapsules selon la revendication 6, **caractérisé en ce qu'**il est prévu au moins une microcapsule (11) avec une substance dont le changement de viscosité, à savoir le passage d'un état solide ou de viscosité élevée à un état de basse viscosité, s'effectue à un niveau d'énergie différent de celui de la substance contenue dans au moins une autre microcapsule (11).

8. Procédé permettant de changer l'état d'au moins une microcapsule (11) selon l'une des revendications 1 à 7 dans un système comprenant des microcapsules (11), dans lequel les microcapsules (11) sont dispersées dans un milieu porteur (22), dans lequel ladite au moins une microcapsule (11) est soumise à une énergie d'activation de substance jusqu'à ce que la substance du noyau (12) passe d'un état solide ou de viscosité élevée à un état de basse viscosité,
- dans lequel, alors que la substance du noyau (12) se trouve à l'état de basse viscosité, la pluralité de particules (16) est modifiée quant à la position et/ou à l'orientation au moyen d'une énergie d'activation de particules, et
- dans lequel l'énergie d'activation de particules permettant à la pluralité de particules (16) de modifier leur position et/ou orientation est maintenue jusqu'à ce que la substance du noyau (12) retourne à un état solide ou de viscosité élevée, **caractérisé en ce que**
- un liquide à rhéologie photosensible dont la viscosité est générée par un rayonnement électromagnétique est utilisé comme substance du noyau (12).

9. Procédé selon la revendication 8, **caractérisé en ce que** le rayonnement électromagnétique est généré par une lampe UV ou une installation laser.

10. Procédé selon la revendication 8, **caractérisé en ce que** l'énergie d'activation de particules permettant la modification de la position et/ou de l'orientation des particules est générée par un champ magnétique, créé par exemple par un aimant permanent ou un électroaimant, ou par un champ électrique.

11. Procédé selon la revendication 8, **caractérisé en ce que** l'énergie d'activation de substance est appliquée globalement sur la surface d'un milieu porteur (22) comportant au moins une microcapsule (11), et **en ce que** l'énergie d'activation de particules est appliquée de manière spécifique sur ladite au moins une microcapsule (11).

12. Procédé selon la revendication 8, **caractérisé en ce que** l'énergie d'activation de substance et l'énergie d'activation de particules sont appliquées globalement sur la surface des microcapsules (11).

13. Procédé selon la revendication 8, **caractérisé en ce que** l'énergie d'activation de substance est appliquée selon différents niveaux d'énergie, et/ou **en ce que** l'énergie d'activation de particules est appliquée selon différents niveaux d'énergie.

14. Procédé selon l'une des revendications 8 à 13, **caractérisé en ce que** l'énergie d'activation de substance et l'énergie d'activation de particules sont appliquées sans contant.
